(19)

Europäisches
Patentamt

European
Patent Office

Office européen
des brevets

(11) **EP 2 627 140 B1**

(12) **EUROPEAN PATENT SPECIFICATION**

(45) Date of publication and mention
of the grant of the patent:
**16.09.2015 Bulletin 2015/38**

(51) Int Cl.:
***H04W 72/12*** *(2009.01)*

(21) Application number: **12305139.3**

(22) Date of filing: **09.02.2012**

(54) **A method for scheduling of radio resources to user terminals of different network operators, and a base station therefor**

Verfahren zum Planen von Funkressourcen auf Benutzerendgeräten verschiedener Netzwerkanwender, und eine Basisstation dafür

Procédé de programmation de ressources radio pour les terminaux utilisateurs de différents opérateurs de réseau et station de base correspondante

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2013 Bulletin 2013/33**

(73) Proprietor: **ALCATEL LUCENT**
**92100 Boulogne-Billancourt (FR)**

(72) Inventors:
• **Aydin, Osman**
**70569 Stuttgart (DE)**

• **Valentin, Stefan**
**70378 Stuttgart (DE)**

(74) Representative: **Kleinbub, Oliver**
**Alcatel-Lucent Deutschland AG**
**Intellectual Property & Standards**
**Lorenzstrasse 10**
**70435 Stuttgart (DE)**

(56) References cited:
**WO-A2-00/41542       GB-A- 2 393 612**
**US-A1- 2002 044 527**

## Description

### Field of the invention

The invention relates to a method for scheduling of radio resources to user terminals of different network operators using a scheduling unit, and a base station adapted to perform said method.

### Background

In the US patent application publication US 2002/0044527 A1, a packet scheduling algorithm is disclosed which is capable of allocating radio resource dynamically, not only based on channel conditions, but also to achieve different performance trade-offs among users with different link qualities. According to the algorithm, channel quality is determined for each user, channel efficiency is calculated, and the channel efficiency value is used as the primary factor in weighting the delivery of packets to or from a given user.

In wireless communication networks, such as Third Generation Partnership Project Long Term Evolution (3GPP LTE), in order to improve efficiency and to reduce cost, it becomes more and more popular to share resources between different network operators. The sharing of resources can be accomplished in different ways. One possibility is to share parts of the infrastructure of a wireless communication network, as e.g. the base station or the backhaul network. A further method is to share the transmission spectrum. Of course also both of these possibilities can be combined.

The principle of sharing a base station between different network operators, which is also called base station virtualization, is that one physical base station hosts two or more virtual base stations. The internal components of a base station, like central processing unit (CPU), memory, or radio and backhaul network interfaces have to be virtualized or have to support virtualization. Every network operator owns one virtual base station and may run its own operational software on this virtual base station.

### Summary

The realization of a joint, i.e. virtualized base station can be envisaged on different so-called OSI-layers (OSI = Open Systems Interconnections), as e.g. on Internet Protocol (IP), Media Access Control (MAC), or physical layer.

However, any method for scheduling of radio resources to user terminals of different network operators should guarantee a certain degree of fairness between the network operators, and should introduce only insignificant delay by sharing the radio resources among the different network operators.

The object of the invention is thus to propose a method for scheduling of radio resources, as e.g. so-called resource elements or resource blocks, to user terminals of different network operators, which offers a certain degree of fairness between the network operators without introducing a significant delay to the scheduling procedure.

The basic idea of the invention is, that a scheduling unit determines weight parameters for the user terminals of the different network operators for scheduling of the radio resources based on a predefined distribution of radio resources among the different network operators and a data throughput per user terminal in a time interval, and that the scheduling unit schedules the radio resources to the user terminals based on said weight parameters.

In an embodiment of the invention, in case of at least a shared or jointly used MAC layer for physical layer sharing, the MAC scheduling unit tracks or must be provided with traceable performance parameters of the scheduling and its result, as e.g. a scheduled data rate and a related radio link quality for the user terminals of the different network operators.

In order to fulfil the above-mentioned requirements for a scheduling unit for scheduling of radio resources to the user terminals of the different network operators, two aspects are covered according to embodiments of the invention. The first aspect is, that a scheduler architecture according to the state of the art is extended by new adaptation blocks that adjust the scheduling parameters for each network operator according to an agreed contract, i.e. according to a predefined distribution of radio resources among the different network operators. The second aspect is to describe, how new operator-specific scheduling parameters are incorporated into scheduling algorithms according to the state of the art.

Thus, according to embodiments of the invention, techniques for user-based scheduling according to the state of the art are transformed to new principles to schedule multiple network operators. To this end, the following new regulations and concepts of a MAC scheduling unit in a shared base station for different network operators is introduced.

The MAC scheduling unit can e.g. be controlled via the following parameters:

- new static input parameters for the scheduling unit dedicated to the different network operators sharing the base station, as e.g. an indication of a distribution of the radio resources between the different network operators,

- new output parameters of the scheduling unit that tune new input parameters of the scheduling unit, as e.g. a data throughput per user terminal that tunes a weight parameter for scheduling of radio resources,

- or a combination of both principles, i.e. of static input parameters and dynamic input parameters with feedback, in a single scheduling step.

In an embodiment of the invention, a shared scheduling unit tracks a quality of service (QoS) per user terminal and thus per network operator, which will have influence on the billing for the network operators for the use of a base station.
The object of the invention is thus achieved by a method for scheduling of radio resources to user terminals of different network operators using a scheduling unit, wherein

- the scheduling unit determines weight parameters for the user terminals of the different network operators for scheduling of the radio resources based on a predefined distribution of radio resources among the different network operators and a data throughput per user terminal in a time interval,

- and the scheduling unit schedules the radio resources to the user terminals of the different network operators based on said weight parameters.

The object of the invention is furthermore achieved by a base station comprising a scheduling unit for scheduling of radio resources to user terminals of different network operators, wherein

- the scheduling unit is adapted to determine weight parameters for the user terminals of the different network operators for scheduling of the radio resources based on a predefined distribution of radio resources among the different network operators and a data throughput per user terminal in a time interval,

- and the scheduling unit is adapted to schedule the radio resources to the user terminals of the different network operators based on said weight parameters.

The invention is described in the following within the framework of 3GPP LTE, however as the invention is not restricted to 3GPP LTE or enhancements thereof, but can in principle be applied in other networks that apply scheduling principles, like e.g. in WiMAX networks (WiMAX = Worldwide Interoperability for Microwave Access), in the following, instead of the term eNodeB used in LTE, the more general term base station is used.
Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows the flow of input and output parameters of a MAC scheduling unit according to an embodiment of the invention.

Fig. 4 schematically shows a joint operator and user terminal scheduling unit according to an embodiment of the invention.

**Description of the embodiments**

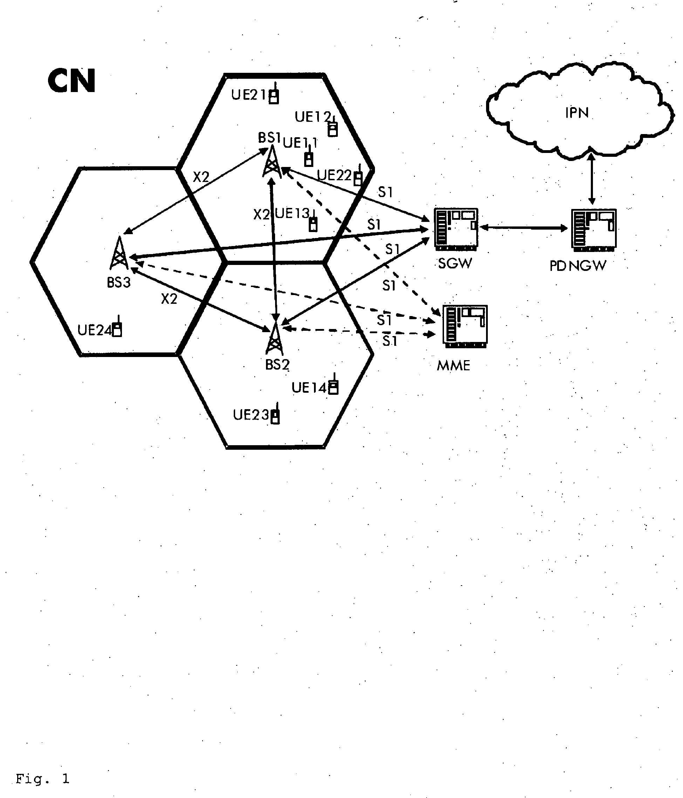

Fig. 1 shows as an example of a communication network in which the invention can be implemented a communication network CN according to the standard 3GPP LTE.
Said communication network CN comprises base stations BS1,...,BS3, user terminals UE11-UE24, a serving gateway SGW, a packet data network gateway PDNGW, and a mobility management entity MME.
The user terminals UE11-UE13 and UE21-UE22 are connected via radio connections to the base station BS1, the user terminals UE14 and UE23 are connected via radio connections to the base station BS2, and the user terminal UE24 is connected via a radio connections to the base station BS3. In future evolutions of LTE, each of the user terminals UE11-UE14 and UE21-UE24 could also be connected via radio connections to multiple of said base stations BS1,...,BS3.

The base stations BS1,...,BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1,...,BS3, i.e. an eNodeB in this example, and the Evolved Packet Core (EPC). The S1 interface has two flavours, S1-MME for exchange of signalling messages between one of the base stations BS1,...,BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1,...,BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1,...,BS3.

The mobility management entity MME performs tasks of the subscriber management and the session management, and also performs the mobility management during handover between different access networks.

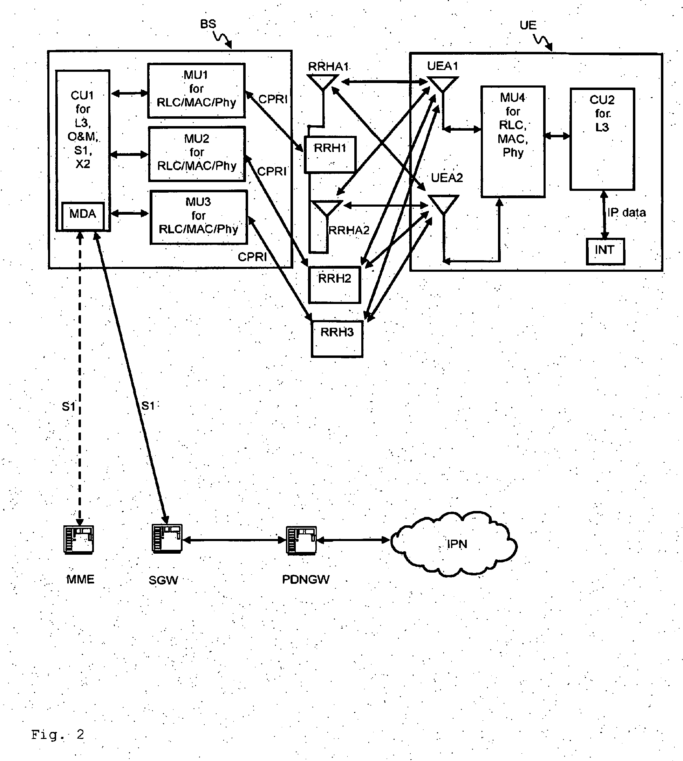

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, the usage of base station BS as described above as a virtual base station with a shared scheduling unit for scheduling of multiple network operators is described according to embodiments of the invention.

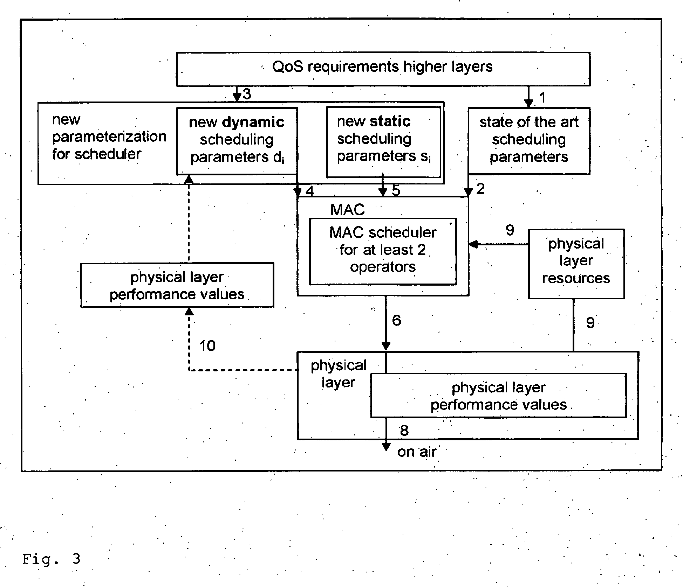

Fig. 3 schematically shows the flow of input and output parameters of a MAC scheduling unit according to an embodiment of the invention.

Said method for performing MAC scheduling for at least two network operators can e.g. be implemented in one of the modem unit boards MU1-MU3 as depicted in fig. 2 and described above.

As basic input parameters, quality of service (QoS) requirements for various user terminals are used to determine scheduling parameters.

In a scheduling method for radio resources according to the state of the art for only one network operator, said QoS requirements of the user terminals are used in a step 1 to determine scheduling parameters, which are transmitted in a step 2 to the MAC scheduling unit. In the MAC scheduling unit, said QoS requirements, as e.g. required transmission delay or required data throughput of the user terminals, are compared to the current achieved delay and data throughput of the user terminals, and preferably the user terminals are scheduled in such a way, that for all user terminals the QoS requirements are fulfilled.

In a scheduling method for radio resources according to an embodiment of the invention for multiple network operators, said QoS requirements of the user terminals are transmitted in a step 3 to a processing block, in which scheduling parameters for the MAC scheduling unit are stored or determined. In an alternative of the embodiment, said QoS requirements of the user terminals are used to determine dynamic scheduling parameters $d_i$ for the user terminals of each operator i, which can change from one scheduling interval to another. Said dynamic scheduling parameters $d_i$ are transmitted to the MAC scheduling unit in step 4.

According to the embodiment of the invention, also static scheduling parameters $s_i$, which either do not change or only change on a longer time scale compared to the dynamic scheduling parameters $d_i$, are transmitted to the MAC scheduling unit in step 5.

The MAC scheduling unit uses both the dynamic parameters $d_i$, and the static parameters $s_i$ to determine weight parameters for the user terminals of the different operators for scheduling of radio resources to the user terminals. Therefor, a priority handling of different RLC buffers, and a transport-format selection, i.e. a selection of transport block size, modulation scheme and antenna mapping, for each user terminal is performed by the MAC scheduling unit, and respective commands are transmitted to the physical layer in step 6. On the physical layer, coding, modulation, antenna mapping, mapping on resource blocks or elements, and transmission over an air interface of the scheduled data is performed in step 8.

The physical layer provides information about available physical layer resources to the MAC scheduling unit in step 9, which schedules the available physical layer resources, i.e. radio resources, to the user terminals as described above.

In a further embodiment of the invention, physical layer performance values, such as data rates per user terminal or per network operator, are determined on a longer time scale, such as several scheduling cycles. Said physical layer performance values are provided as input parameters for a scheduling method for determination of scheduling parameters in step 10 in order to assure long-term fairness and stability among the network operators. If e.g. the data rate for a first network operator on such a longer time-scale is lower than an agreed data rate, and the data rate for the other network operators is above their agreed data rate, then user terminals of the first network operator are scheduled with a higher priority. Furthermore, said physical layer performance values are used for billing of the use of the base station, and are transmitted to the different network operators.

According to an embodiment of the invention, the scheduling of radio resources to user terminals of different network operators is performed in two scheduling steps in the MAC scheduling unit. In a first scheduling step, the radio resources are scheduled to the different network operators based on a predefined distribution of radio resources among the different network operators, and in a second scheduling step, the radio resources are scheduled per network operator to the user terminals based on a data throughput per user terminal in a time interval.

Static parameters $s_i$ that indicate the distribution of radio resources between the different network operators i are used to schedule the radio resources to the different network operators i. These static parameters $s_i$ provide transparently for each network operator the frequency of occurrence for their user terminals, and can be used e.g. in a round robin or a proportional fair scheduler as described in the following.

Usage of a so-called round robin scheduler for scheduling:

If according to an agreed frame contract, radio resource usage between the network operators is equally distributed, each of them get the value $s_i=1$, i.e. for the case of two network operators, one round robin loop will look like this: loop1: operatorl, operator2. Loop2: operator1, operator2, ... ,thus, each network operator will be scheduled alternately.

In case the radio resource usage is regulated in an unequal way, e.g. the resource usage rate for the first network operator is 2/3 and for the second network operator is 1/3, then the first network operator gets the value $s_1=2$ and the second network operator gets the value $s_2=1$. So the first operator's user terminals are represented 2 times in the round robin loop, i.e. one round robin loop will look like this: loop1: operator1, operator1, operator2. Loop2: operator1, operator1, operator2...

Usage of a so-called proportional fair scheduler:

The classic proportional fair scheduling is transferred to the case of scheduling of multiple network operators. A proportional fair weight parameter $w_i$ for each operator i is extended with static parameters $s_i$ to support a multiple network operator case. The static parameter $s_i$ is implemented into the numerator of $w_i$ specific for each network operator.

$$w_i = (s_i \cdot R_i)/T_i \qquad\qquad i = 1,2 \text{ (operator1, operator2)} \qquad (1)$$

The parameter $R_i$ in this case indicates a radio link quality averaged over the user terminals of the network operator i, and averaged over one or more elapsed scheduling cycles.

The parameter $T_i$ in this case indicates a data throughput averaged over the user terminals of the network operator i, and averaged over one or more elapsed scheduling cycles.

The static parameter $s_i$ for each network operator i reflects the distribution of radio resources according to an agreed contract between the network operators, which is independent of the dynamics of a mobile communication network like the effective used radio resources for a physical transport block.

In alternatives of the embodiment, also QoS implications can be used for a tuning of the static parameter $s_i$:

The static parameter $s_i$ for one network operator can be set to different values in a given interval to reflect the agreed QoS differences of user terminals for a specific network operator. The parameter $s_i$ is chosen within the interval $s_i=[0,1]$ such that

$$\sum_i s_i \le 1 .$$

Within this constraint, the values are defined according to business agreements between the network operators and resource owner, which is lending base station hardware and spectrum to the network operators, e.g., $s_1 = 0.3$ and $s_2 = 0.7$.

To summarize, in a first scheduling step, the radio resources are scheduled to the different network operators based on a static parameter $s_i$ using e.g. a round robin scheduler or a proportional fair scheduler.

Now that the radio resources are distributed between the different network operators, in a second scheduling step, the radio resources are scheduled per network operator to the user terminals.

Said scheduling in the second scheduling step can be performed by means of a proportional fair scheduler according to the state of the art, i.e. by means of a weight parameter $w_j$ for each user terminal j

$$w_j = R_j / T_j \qquad\qquad (2)$$

with $R_j$ being a radio link quality of the user terminal j averaged over one or more elapsed scheduling cycles, and with $T_j$ being a data throughput averaged over one or more elapsed scheduling cycles.

Thus, in the second scheduling step, user terminals with a higher weight parameter $w_j$ are scheduled first.

In an alternative embodiment for the second scheduling step, the proportional fair weight parameter $w_j$ of the user terminal j is extended with a dynamic parameter. The dynamic parameter $d_j$ can be implemented into the denominator of the weight parameter $w_j$, specific for each network operator according to

$$w_j = R_j / (T_j(d_j)) \qquad\qquad (3)$$

Alternative implementation may include the reciprocal of $d_j$ in the numerator.

The dynamic parameter $d_j$ reflects the distribution of radio resources according to the averaged used radio resources per user terminal for each network operator. So the dynamics of a mobile communication network like effective used radio resources for a user terminal for each network operator are considered in a proportional fair scheduler.

The dynamic parameter $d_j$ can e.g. be determined based on the used radio resources per user terminal averaged over one or more scheduling cycles $U_j$ normalized by the overall available radio resources $U_{ges}$ according to

$$d_j = k \cdot U_j / U_{ges} \qquad\qquad (4)$$

with k being a constant factor.

The dynamic parameter $d_j$ can alternatively or additionally e.g. be determined based on the QoS differences of user terminals for a specific network operator, i.e. a higher QoS of a user terminal leads e.g. to a lower dynamic parameter $d_j$. Said QoS differences of user terminals for a specific network operator can e.g. be predefined values agreed by contract or achieved, i.e. measured, values. The dynamic parameter $d_j$ is adapted during the runtime according to the users' current QoS requirements. However, lower and upper bounds for this parameter can be fixed according to business contracts between network operators and resource owner.

In the case of a proportional fair scheduler, $T_j$ as being the data throughput averaged over one or more elapsed scheduling cycles, can be recursively determined with a forgetting factor b for scheduled user terminals, which is adapted specifically per user terminal for each network operator, and which is dependent on the dynamic parameter $d_j$ according to

$$T_j(t, d_i) = (1 - b_j(d_i)) \cdot T_j(t-1) + b_j(d_i) \cdot R_j(t-1) \qquad\qquad (5)$$

where $R_j(t-1)$ stands for the instantaneous data rate as supported by the channel during time slot t-1. The forgetting factor $b_j$ provides performance means to reschedule an arbitrary user terminal j at earlier or later points in time.

As an example, we assume one user terminal and two operators with an instantaneous data rate $R_1(t) = R_1(t-1) = 1$ and average throughput $T_1(t) = 0.5$. The dynamic weight parameter is $d_1 = 0.25$ for operator 1 and $d_2 = 0.75$ for operator 2. Assuming $d_i = b_j(d_i)$ for simplicity yields $T = 0.625$ and $w_1 = 1.6$ for operator 1 and $T = 0.875$ and $w_1 = 1.143$ for operator 2. Since the dynamic parameter d affects the denominator of equation (3), the operator with lower d receives a higher weight w. Thus, operator 1 receives priority to schedule user 1 in the next cycle.

In alternatives of the above-described embodiments, a processing of the term $T_j$ by a non-linear function f that depends on the above-described dynamic parameter $d_j$, and further parameters, as e.g. the so-called scheduler-specific parameter $\alpha$. This function is defined as

$$T* = f(T_j, \alpha, d_j) \qquad\qquad (8)$$

In the above-described embodiments, in a first scheduling step, the radio resources are scheduled to the different network operators, and in a second scheduling step, the radio resources are scheduled per network operator to the user terminals.

In the following, embodiments of the inventions are described in which scheduling of the radio resources to the user terminals of multiple network operators is performed in a single scheduling step, i.e. a joint operator and user terminal scheduling is performed that operates on all sets of user terminals for all network operators at once.

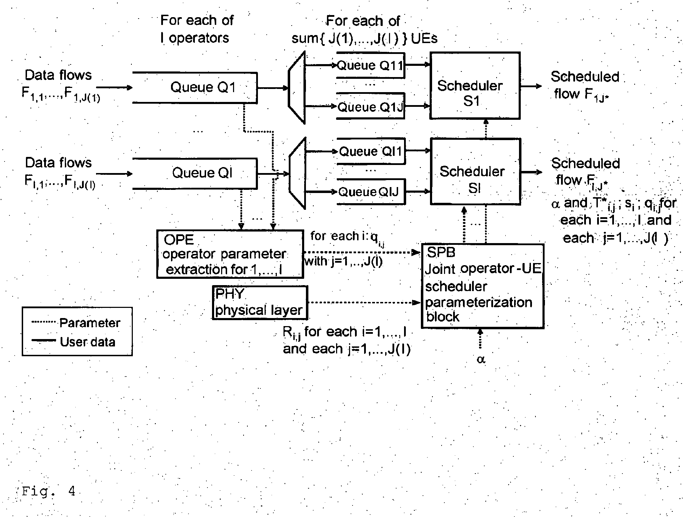

For this scheduling principle, fig. 4 illustrates the basic design for I network operators and J(I) user terminals.

Fig. 4 schematically shows a joint operator and user terminal scheduling unit according to an embodiment of the invention.

The joint operator and user terminal scheduling unit comprises a queue $Q_i$ for each of the I network operators. Each queue $Q_i$ receives data flows $F_{ij}$ for each of the j(i) user terminals, i.e. the queues represent RLC buffers.

Each of said queues $Q_i$ is connected to a processing block for network operator parameter extraction OPE, in which for each of the I network operators, a quality of service requirement $q_{ij}$ for each of the j(i) user terminals is extracted out of said data flows $F_{ij}$.

Furthermore each of said queues $Q_i$ is connected via a multiplexer to a respective queue $Q_{ij}$ for the different user terminals.

The queues $Q_{ij}$ of each network operator i are connected to a respective MAC scheduler $S_i$ for scheduling the data flows $F_{ij}$ of the respective network operator i. In an alternative of the embodiment, said MAC schedulers S1,...,SI of the different network operators can be implemented in a single MAC scheduler for all I network operators.

A joint operator and user terminal scheduler parameterization block SPB determines weight parameters $w_{ij}$ for scheduling the user terminals of the different network operators as described in detail below. Therefor, the joint operator and user terminal scheduler parameterization block SPB receives the quality service requirement $q_{ij}$ for each of the j(i) user terminals from the processing block for network operator parameter extraction OPE, and receives from the physical layer PHY a radio link quality $R_{ij}$ for each of the j(i) user terminals. Preferably, the joint operator and user terminal scheduler parameterization block SPB also receives the so-called scheduler-specific parameter $\alpha$. As the well-known fairness parameter, $\alpha$ adjusts the fairness type among the network operators, by choosing the utility function between proportional fairness, i.e. logarithmic utility, and max-rate fairness, i.e. linear utility. This static fairness parameter $\alpha$ is specified by the resource owner.

The joint operator and user terminal scheduler parameterization block SPB schedules the different MAC scheduler S1,...,SI in the order of the weight parameters $w_{ij}$, and the different MAC scheduler S1,...,SI receive the weight parameters $w_{ij}$ and in turn schedule the different j(i) user terminals also in the order of the weight parameters $w_{ij}$.

In an alternative of the embodiment, if only a single scheduler is used, said scheduler receive the weight parameters $w_{ij}$ and schedules for all I network operators the different j(i) user terminals in the order of the weight parameters $w_{ij}$.

Per scheduling cycle, an arbitrary network operator i=1,...,I has to serve J(i) user terminals. In this embodiment of the invention, the network operators are not scheduled separately. Instead, a network operator scheduling is reflected within conventional user terminal based schedulers by adjusting the scheduling parameters. This extends the above-mentioned parameters as the data throughput per user terminal $T_j$ and the dynamic parameter $d_j$ to parameters that are specific for each operator i=1,..., I and for each user terminal j=1,...,J(I).

In particular $T_{ij}$ is now the moving average of the data rate for an arbitrary user j that is associated to an arbitrary network operator i averaged over one or more elapsed scheduling cycles, while $d_{ij}$ is now the dynamic parameter to calculate $T_{ij}$ for an arbitrary user terminal j that is associated to an arbitrary network operator i.

In case of a proportional fair scheduling unit, $T_{ij}$ can be recursively determined with a forgetting factor b for scheduled user terminals, which is adapted specifically per user terminal j and per network operator i, and which is dependent on the dynamic parameter $d_{ij}$ according to

$$T_{ij}(t, d_{ij}) = (1 - b_{ij}(d_{ij})) \cdot T_{ij}(t-1) + b_{ij}(d_{ij}) \cdot R_{ij}(t-1) \quad (9)$$

In case $b_{ij}(d_{ij}) = d_{ij}$ is set, $d_{ij}$ is the forgetting factor that is associated to an arbitrary network operator j and to an arbitrary user terminal j.

Again, as described above, the dynamic parameter $d_{ij}$ reflects the distribution of radio resources according to the averaged used radio resources per user terminal j and per network operator i. So the dynamics of a mobile communication network like effective used radio resources for a user terminal for each network operator are considered in a proportional fair scheduler.

The dynamic parameter $d_{ij}$ can e.g. be determined based on the used radio resources per user terminal and per network operator averaged over one or more scheduling cycles $U_{ij}$ normalized by the overall available radio resources $U_{ges}$ according to

$$d_{ij} = k \cdot U_{ij}/U_{ges} \qquad\qquad (10)$$

with k being a constant factor.

The dynamic parameter $d_{ij}$ can alternatively or additionally e.g. be determined based on the QoS differences of user terminals of a specific network operator, i.e. a higher QoS of a user terminal leads e.g. to a lower dynamic parameter $d_{ij}$. Said QoS differences of user terminals for a specific network operator can e.g. be predefined values agreed by contract or achieved, i.e. measured, values.

Defining the dynamic parameters $d_{ij}$ and the data throughput $T_{ij}$, and obtaining the number of user terminals J(i) per operator i and the quality of service requirement $q_{ij}$ for each user terminal j and each network operator i requires queue observation. As illustrated in fig. 4, quality of service requirements $q_{ij}$ are extracted by the processing block for network operator parameter extraction OPE, and the radio link qualities $R_{ij}$ are transmitted from the physical layer PHY. After transmission of parameters from higher layers and the physical layer PHY, as e.g. radio link quality $R_{ij}$, i.e. channel stability, and service agreements, and after defining the dynamic parameters $d_{ij}$ as described above, the data throughput $T_{ij}$ can be computed in the joint operator and user terminal scheduler parameterization block SPB, and in turn weight parameters $w_{ij}$ for scheduling radio resources are calculated.

For each network operator and user terminal, the values of the data throughput $T_{ij}$, the static parameter $s_i$ reflecting the distribution of radio resources between the network operators, the quality of service requirements $q_{ij}$, and the radio link qualities $R_{ij}$ are used in the joint operator and user terminal scheduler parameterization block SPB to calculate weight parameters $w_{ij}$ for scheduling radio resources as according to

$$w_{ij} = \frac{s_i q_{ij} R_{ij}}{T_{ij}} \cdot \qquad\qquad (11)$$

In an alternative of the embodiment, the values of the data throughput $T_{ij}$, the static parameter $s_i$ reflecting the distribution of radio resources between the network operators, the quality of service requirements $q_{ij}$, and the radio link qualities $R_{ij}$ are transmitted to the schedulers S1,...,SI, or to a single scheduler in case only one scheduler is used for scheduling all I network operators, and used to calculate the weight parameters $w_{ij}$ for scheduling radio resources as described above.

With said weight parameter computation and the architectural changes depicted in fig. 4, scheduling among network operators has been integrated into existing user terminal schedulers without introducing an additional scheduling stage.

In an embodiment of the invention, an outer control loop to the schedulers S1,...,SI as indicated as step 10 in fig. 3 is implemented. As illustrated in fig. 3, this loop feeds the output of the I schedulers S1,...,SI to the parameterization block SPB. Here, this information can feed a further control cycle to assure long-term fairness and stability among the network operators. Furthermore, the base station owner can provide the observed scheduling decisions to the network operators for billing.

**Claims**

1. A method for scheduling of radio resources to user terminals (UE11-UE24) of different network operators using a scheduling unit, **characterized in, that**

   • the scheduling unit determines weight parameters for the user terminals (UE11-UE24) of the different network operators for scheduling of the radio resources based on a predefined distribution of radio resources among the different network operators ($s_i$) and data throughputs per user terminal in a time interval ($T_{ij}$),
   • and the scheduling unit schedules the radio resources to the user terminals (UE11-UE24) of the different network operators based on said weight parameters.

2. A method according to claim 1, wherein the scheduling unit determines said weight parameters based on used radio resources per user terminal in a time interval.

3. A method according to claim 1 or 2, wherein the scheduling unit determines said weight parameters based on agreed or achieved qualities of service per user terminal.

4. A method according to any of the preceding claims, wherein the scheduling unit determines said weight parameters based on radio link qualities per user terminal ($R_{ij}$).

5. A method according to any of the preceding claims, wherein said predefined distribution of radio resources among the different network operators ($s_i$) is set to values out of predefined intervals based on agreed qualities of service for the user terminals of the different network operators.

6. A method according to any of the claims 1 to 5, wherein said scheduling of the radio resources to user terminals of different network operators is performed in a single scheduling step.

7. A method according to any of the claims 1 to 5, wherein in a first scheduling step, the radio resources are scheduled to the different network operators based on said predefined distribution of radio resources among the different network operators ($s_i$), and in a second scheduling step, the radio resources are scheduled per network operator to the user terminals (UE11-UE24) based on said data throughputs per user terminal in the time interval.

8. A method according to claim 7, wherein for the first scheduling step round robin scheduling is used, and for the second scheduling step proportional fair scheduling is used.

9. A method according to any of the claims 1 to 6, wherein said scheduling unit is a proportional fair scheduling unit.

10. A method according to any of the preceding claims, wherein said data throughputs are determined based on forgetting factors.

11. A method according to any of the preceding claims, wherein said data throughputs are weighted with at least one of a group of used radio resources per user terminal and achieved qualities of service per user terminal.

12. A method according to any of the preceding claims, wherein information about a performed scheduling of the radio resources on a time-scale of several scheduling intervals is used by the scheduling unit for determination of said weight parameters.

13. A method according to any of the preceding claims, wherein said information about a performed scheduling of the radio resources is transmitted to the different network operators and used for billing.

14. A method according to any of the preceding claims, wherein said scheduling is performed on at least one of a group of internet protocol layer, medium access control layer, and physical layer.

15. A base station comprising a scheduling unit for scheduling of radio resources to user terminals (UE11-UE24) of different network operators, **characterized in, that**

    • the scheduling unit is adapted to determine weight parameters for the user terminals (UE11-UE24 ) of the different network operators for scheduling of the radio resources based on a predefined distribution of radio ressources among the different network operators ($s_i$) and data throughputs per user terminal in a time interval ($T_{ij}$),
    • and the scheduling unit is adapted to schedule the radio resources to the user terminals (UE11-UE24) of the different network operators based on said weight parameters.

**Patentansprüche**

1. Verfahren zur Planung von Funkressourcen für Benutzerendgeräte (UE11-UE24) verschiedener, eine Planungseinheit benutzender Netzwerkbetreiber, **dadurch gekennzeichnet, dass**

• die Planungseinheit für die Planung der Funkressourcen auf der Grundlage einer vordefinierten Verteilung der Funkressourcen auf die verschiedenen Netzwerkbetreiber ($s_i$) und Datendurchsätze pro Benutzerendgerät in einem gegebenen Zeitintervall ($T_{ij}$) Gewichtungsparameter für die Benutzerendgeräte (UE11-UE24) der verschiedenen Netzwerkbetreiber bestimmt,

• und die Planungseinheit den Benutzerendgeräten (UE11-UE24) der verschiedenen Netzwerkbetreiber die Funkressourcen auf der Grundlage besagter Gewichtungsparameter zuteilt.

2. Verfahren nach Anspruch 1, wobei die Planungseinheit auf der Grundlage der pro Benutzerendgerät in einem gegebenen Zeitraum benutzten Funkressourcen besagte Gewichtungsparameter bestimmt.

3. Verfahren nach Anspruch 1 oder 2, wobei die Planungseinheit besagte Gewichtungsparameter auf der Grundlage vereinbarter oder gespeicherter Dienstgüten pro Benutzerendgerät bestimmt

4. Verfahren nach einem beliebigen der vorstehenden Ansprüche, wobei die Planungseinheit besagte Gewichtungsparameter auf der Grundlage von Funkverbindungseigenschaften pro Benutzerendgerät ($R_{ij}$) bestimmt.

5. Verfahren nach einem beliebigen der vorstehenden Ansprüche, wobei für besagte, vordefnierte Verteilung der Funkressourcen zwischen den verschiedenen Netzwerkbetreibern ($s_i$) auf der Grundlage vereinbarter Dienstgüten für die Benutzerendgeräte verschiedener Netzwerkbetreiber Werte außerhalb der vordefinierten Intervalle vorgegeben werden.

6. Verfahren nach einem der Ansprüche 1 bis 5, wobei besagte Planung der Funkressourcen für Benutzerendgeräte verschiedener Netzwerkbetreiber in einem einzigen Planungsschritt erfolgt.

7. Verfahren nach einem der Ansprüche 1 bis 5, wobei die Funkressourcen in einem ersten Planungsschritt den verschiedenen Netzwerkbetreibern auf der Grundlage besagter, vordefinierter Verteilung der Funkressourcen zwischen den verschiedene Netzwerkbetreibern ($s_i$) zugeteilt werden, und wobei den Benutzerendgeräten (UE11-UE24) dann in einem zweiten Planungsschritt die Funkressourcen pro Netzwerkbetreiber auf der Grundlage besagter Datendurchsätze pro Benutzerendgerät und Zeitintervall zugeteilt werden.

8. Verfahren nach Anspruch 7, wobei für den ersten Planungsschritt das Round-Robin-Verfahren verwendet wird und für den zweiten Planungsschritt das Proportional-Fair-Verfahren.

9. Verfahren nach einem beliebigen der Ansprüche 1 bis 6, wobei besagte Planungseinheit ein Proportional-Fair-Planer ist

10. Verfahren nach einem beliebigen der vorstehenden Ansprüche, wobei besagte Datendurchsätze auf der Grundlage von Vergessensfaktoren bestimmt werden.

11. Verfahren nach einem beliebigen der vorstehenden Ansprüche, wobei besagte Datendurchsätze mit mindestens einer aus einer Gruppe benutzter Funkressourcen pro Benutzerendgerät und den erreichten Dienstgüten pro Benutzerendgerät gewichtet werden.

12. Verfahren nach einem beliebigen der vorstehenden Ansprüche, wobei die Planungseinheit für die Bestimmung besagter Gewichtungsparameter Daten zu einer durchgeführten Planung von Funkressourcen auf einer Zeitskala mehrerer Planungsintervalle verwendet.

13. Verfahren nach einem beliebigen der vorstehenden Ansprüche, wobei besagte Daten zu einer durchgeführten Planung von Funkressourcen den verschiedenen Netzwerkbetreibern übermittelt und zu Abrechnungszwecken verwendet werden.

14. Verfahren nach einem beliebigen der vorstehenden Ansprüche, wobei besagte Planung auf mindestens eine Schicht aus einer Gruppe von Internetprotokoll-Schicht, Mediumzugangssteuerungs-Schicht und physikalischen Schicht angewendet wird.

15. Eine Basisstation, eine Planungseinheit für die Zuteilung der Funkressourcen an die Benutzerendgeräte (UE11-UE24) verschiedener Netzwerkbetreiber umfassend, **dadurch gekennzeichnet, dass**

• die Planungseinheit für die Planung der Funkressourcen dafür ausgelegt ist, auf der Grundlage einer vordefinierten Verteilung der Funkressourcen auf die verschiedenen Netzwerkbetreiber ($s_i$) und Datendurchsätze pro Benutzerendgerät in einem gegebenen Zeitintervall ($T_{ij}$) Gewichtungsparameter für die Benutzerendgeräte (UE11-UE24) der verschiedenen Netzwerkbetreiber zu bestimmen,

• und die Planungseinheit dafür ausgelegt ist, den Benutzerendgeräten (UE11-UE24) der verschiedenen Netzwerkbetreiber die Funkressourcen auf der Grundlage besagter Gewichtungsparameter zuzuteilen.

**Revendications**

1. Procédé pour planifier des ressources radio sur des terminaux utilisateur (UE11 à UE24) de différents opérateurs de réseau en utilisant une unité de planification, **caractérisé en ce que**

    • l'unité de planification détermine des paramètres de pondération pour les terminaux utilisateur (UE11 à UE24) des différents opérateurs de réseau afin de planifier les ressources radio sur la base d'une distribution des ressources radio prédéfinie parmi les différents opérateurs de réseau ($s_i$) et des quantités de données par terminal utilisateur au cours d'un intervalle de temps ($T_{ij}$),
    • et l'unité de planification planifie les ressources radio sur les terminaux utilisateur (UE11 à UE24) des différents opérateurs de réseau sur la base desdits paramètres de pondération.

2. Procédé selon la revendication 1, dans lequel l'unité de planification détermine lesdits paramètres de pondération sur la base des ressources radio utilisées par terminal utilisateur au cours d'un intervalle de temps.

3. Procédé selon la revendication 1 ou 2, dans lequel l'unité de planification détermine lesdits paramètres de pondération sur la base de qualités de service convenues ou obtenues par terminal utilisateur.

4. Procédé selon l'une quelconque des revendications précédentes, dans lequel l'unité de planification détermine lesdits paramètres de pondération sur la base des qualités de liaison radio par terminal utilisateur ($R_{ij}$).

5. Procédé selon l'une quelconque des revendications précédentes, dans lequel ladite distribution des ressources radio prédéfinie parmi les différents opérateurs de réseau ($s_i$) est réglée sur des valeurs parmi des intervalles prédéfinis sur la base des qualités de service convenues pour les terminaux utilisateur des différents opérateurs de réseau.

6. Procédé selon l'une quelconque des revendications 1 à 5, dans lequel ladite planification des ressources radio sur des terminaux utilisateur de différents opérateurs de réseau est exécutée en une seule étape de planification.

7. Procédé selon l'une quelconque des revendications 1 à 5, dans lequel dans une première étape de planification, les ressources radio sont planifiées sur les différents opérateurs de réseau sur la base de ladite distribution des ressources radio prédéfinie parmi les différents opérateurs de réseau ($s_i$), et dans une deuxième étape de planification, les ressources radio sont planifiées par opérateur de réseau sur les terminaux utilisateur (UE11 à UE24) sur la base desdites quantités de données par terminal utilisateur au cours de l'intervalle de temps.

8. Procédé selon la revendication 7, dans lequel, pour la première étape de planification, une répartition par permutation circulaire est utilisée et, pour la deuxième étape de planification, une planification équitable proportionnelle est utilisée.

9. Procédé selon l'une quelconque des revendications 1 à 6, dans lequel ladite unité de planification est une unité de planification équitable proportionnelle.

10. Procédé selon l'une quelconque des revendications précédentes, dans lequel lesdites quantités de données sont déterminées sur la base de facteurs d'oubli.

11. Procédé selon l'une quelconque des revendications précédentes, dans lequel lesdites quantités de données sont pondérées avec au moins un élément parmi un groupe de ressources radio utilisées par terminal utilisateur et de qualités de service obtenues par terminal utilisateur.

12. Procédé selon l'une quelconque des revendications précédentes, dans lequel des informations sur une planification exécutée des ressources radio sur une échelle de temps de plusieurs intervalles de planification sont utilisées par l'unité de planification pour déterminer lesdits paramètres de pondération.

13. Procédé, selon l'une quelconque des revendications précédentes, dans lequel lesdites informations sur une planification exécutée des ressources radio sont transmises aux différents opérateurs de réseau et utilisées pour la facturation.

14. Procédé selon l'une quelconque des revendications précédentes, dans lequel ladite planification est exécutée sur au moins une couche parmi un groupe constitué d'une couche de protocole Internet, d'une couche de contrôle d'accès au support et d'une couche physique.

15. Station de base comprenant une unité de planification pour planifier des ressources radio sur des terminaux utilisateur (UE11 à UE24) de différents opérateurs de réseau, **caractérisée en ce que**

• l'unité de planification est adaptée pour déterminer des paramètres de pondération pour les terminaux utilisateur (UE11 à UE24) des différents opérateurs de réseau afin de planifier les ressources radio sur la base d'une distribution des ressources radio prédéfinie parmi les différents opérateurs de réseau ($s_i$) et des quantités de données par terminal utilisateur au cours d'un intervalle de temps ($T_{ij}$),
• et l'unité de planification est adaptée pour planifier les ressources radio sur les terminaux utilisateur (UE11 à UE24) des différents opérateurs de réseau sur la base desdits paramètres de pondération.

Fig. 1

Fig. 2

Fig. 3

For each of
I operators

For each of
sum{ J(1),...,J(I) } UEs

Data flows
$F_{1,1},...,F_{1,J(1)}$ → Queue Q1 →▷→ Queue Q11 → Scheduler S1 → Scheduled flow $F_{1J}*$
→ Queue Q1J

...

Data flows
$F_{I,1},...,F_{I,J(I)}$ → Queue QI →▷→ Queue QI1 → Scheduler SI → Scheduled flow $F_{I,J}*$
→ Queue QIJ

OPE
operator parameter
extraction for 1,...,I

for each i: $q_{i,j}$
with j=1,..,J(I)

PHY
physical layer

$R_{i,j}$ for each i=1,...,I
and each j=1,...,J(I)

SPB
Joint operator -UE
scheduler
parameterization
block

α

α and $T*_{i,j}$ ; $s_i$ ; $q_{i,j}$ for
each i=1,...,I and
each j=1,...,J(I )

········ Parameter
——— User data

Fig. 4

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020044527 A1